(19) Europäisches Patentamt
European Patent Office
Office européen des brevets

(11) **EP 4 234 307 A1**

(12) **EUROPÄISCHE PATENTANMELDUNG**

(43) Veröffentlichungstag:
**30.08.2023   Patentblatt 2023/35**

(21) Anmeldenummer: **23157932.7**

(22) Anmeldetag: **22.02.2023**

(51) Internationale Patentklassifikation (IPC):
**B60L 50/53** (2019.01)      **B60L 58/12** (2019.01)
**B60L 58/18** (2019.01)      **B60L 58/22** (2019.01)

(52) Gemeinsame Patentklassifikation (CPC):
**B60L 58/18; B60L 50/53; B60L 58/12; B60L 58/22;**
B60L 2200/26

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **23.02.2022   DE 102022201887**

(71) Anmelder: **Siemens Mobility GmbH**
**81739 München (DE)**

(72) Erfinder:
• **Hassler, Stefan**
  **91281 Kirchenthumbach, OT Neuzirkendorf (DE)**
• **Wolf, Matthias Fabian**
  **90403 Nürnberg (DE)**

(74) Vertreter: **Siemens Patent Attorneys**
**Postfach 22 16 34**
**80506 München (DE)**

(54) **VERFAHREN ZUM BETREIBEN EINER SPEICHERANORDNUNG EINES SCHIENENFAHRZEUGS**

(57)   Die Erfindung betrifft ein Verfahren zum Betreiben einer zumindest zwei elektrisch parallel geschaltete Energiespeicherzweige aufweisenden Speicheranordnung eines Schienenfahrzeugs. Erfindungsgemäß ist vorgesehen, dass beim Laden der Speicheranordnung mit Ladeenergie die Aufteilung der Ladeenergie auf die Energiespeicherzweige in Abhängigkeit von deren zweigindividuellen Energieaufnahmefähigkeit erfolgt, die zumindest zwei Energiespeicherzweige jeweils auf denselben relativen Ladezustandssollwert geladen werden, wobei der relative Ladezustandssollwert die Energie angibt, die der jeweilige Energiespeicherzweig, bezogen auf die von ihm individuell tatsächlich speicherbare Maximalenergie, nach dem Laden speichern soll, und wobei der relative Ladezustandssollwert berechnet wird gemäß SoCsoll = SoCm + (dSoC/2) , wobei SoCsoll den Ladezustandssollwert, dSoC einen relativen Ladezustandsänderungswert und SoCm einen Ladezustandsmittelwert bezeichnet.

FIG 2

**Beschreibung**

Die Erfindung bezieht sich auf ein Verfahren zum Betreiben einer mit zumindest zwei elektrisch parallel geschalteten Energiespeicherzweigen ausgestatteten Speicheranordnung eines Schienenfahrzeugs sowie ein Schienenfahrzeug.

Ein solches Verfahren ist beispielsweise aus der Offenlegungsschrift US 2018/090948 A1 bekannt.

Der Erfindung liegt die Aufgabe zugrunde, ein Verfahren zum Betreiben einer Speicheranordnung, die mit zumindest zwei elektrisch parallel geschalteten Speicherzweigen ausgestattet ist, anzugeben, mit dem eine besonders lange Lebensdauer der Speicheranordnung erzielbar ist.

Diese Aufgabe wird durch ein Verfahren sowie ein Schienenfahrzeug mit den jeweiligen Merkmalen der unabhängigen Patentansprüche gelöst. Vorteilhafte Ausgestaltungen sind in jeweiligen abhängigen Patentansprüchen angegeben.

Danach ist erfindungsgemäß vorgesehen, dass beim Laden der Speicheranordnung mit Ladeenergie eine Aufteilung der Ladeenergie auf die Energiespeicherzweige in Abhängigkeit von deren zweigindividuellen Energieaufnahmefähigkeit erfolgt, die zumindest zwei Energiespeicherzweige jeweils auf denselben relativen Ladezustandssollwert geladen werden, wobei der relative Ladezustandssollwert die Energie angibt, die der jeweilige Energiespeicherzweig, bezogen auf die von ihm individuell tatsächlich speicherbare Maximalenergie, nach dem Laden speichern soll, und wobei der relative Ladezustandssollwert berechnet wird gemäß

$$SoCsoll = SoCm + (dSoC/2)$$

wobei SoCsoll den Ladezustandssollwert, dSoC einen relativen Ladezustandsänderungswert und SoCm einen Ladezustandsmittelwert bezeichnet.

Ein wesentlicher Vorteil des erfindungsgemäßen Verfahrens ist darin zu sehen, dass trotz der Parallelschaltung der Energiespeicherzweige ein Laden zweigindividuell erfolgt, und zwar mit Blick auf die jeweilige Energieaufnahmefähigkeit des jeweiligen Zweiges. Speicherzweige, die eine hohe Energieaufnahmefähigkeit aufweisen, können somit beim Laden höher belastet werden bzw. mit mehr Energie beaufschlagt werden als andere Energiespeicherzweige, bei denen die Energieaufnahmefähigkeit beispielsweise aufgrund von Alterung bereits reduziert ist. Durch das Berücksichtigen der zweigindividuellen Energieaufnahmefähigkeit lässt sich mit anderen Worten vermeiden, dass bereits hinsichtlich ihrer Belastbarkeit reduzierte Energiespeicherzweige genauso belastet werden, wie demgegenüber noch leistungsfähigere Energiespeicherzweige, wodurch in der Gesamtbetrachtung die Lebensdauer der resultierenden Speicheranordnung insgesamt dadurch erhöht wird, dass schwächere Energiespeicherzweige gegenüber leistungsfähigeren weniger belastet bzw. geschont werden.

Die Aufteilung der Ladeenergie auf die Energiespeicherzweige erfolgt gemäß einer Weiterbildung in Abhängigkeit von zweigindividuellen, relativen Energieaufnahmefähigkeitsangaben, die jeweils die auf eine nominale Energieaufnahmekapazität des jeweiligen Energiespeicherzweiges bezogene tatsächliche Energieaufnahmefähigkeit angeben.

Gemäß einer weiteren Weiterbildung wird nach dem Speichern der Ladeenergie Entladeenergie aus der Speicheranordnung entnommen, wobei die zumindest zwei Energiespeicherzweige beim Entladen bzw. bei jedem Entladevorgang jeweils auf denselben relativen Entladezustandssollwert entladen werden, und wobei der relative Entladezustandssollwert den Anteil der Energie angibt, den der jeweilige Energiespeicherzweig, bezogen auf die von ihm individuell tatsächlich speicherbare Maximalenergie, nach dem Entladen noch speichern soll.

Gemäß einer auf der voranstehenden Weiterbildung basierenden weiteren Weiterbildung wird der relative Entladezustandssollwert berechnet gemäß

$$SoCe = SoCm - (dSoC/2)$$

wobei SoCe den Entladezustandssollwert, dSoC den relativen Ladezustandsänderungswert und SoCm den Ladezustandsmittelwert bezeichnet.

Gemäß einer weiteren Weiterbildung wird ein relativer Energieaufnahmefähigkeitsmittelwert ermittelt, der eine mittlere, auf die Summe der nominalen Energieaufnahmekapazitäten aller Energiespeicherzweige der Speicheranordnung bezogene relative Energieaufnahmefähigkeit der Speicheranordnung beschreibt, und wird in Abhängigkeit von dem relativen Energieaufnahmefähigkeitswert der relative Ladezustandsänderungswert ermittelt.

Gemäß einer auf der voranstehenden Weiterbildung basierenden Weiterbildung wird der relative Energieaufnahmefähigkeitsmittelwert berechnet gemäß

$$SoH' = \frac{\sum_{i=1}^{N} SoHi \cdot Ei}{\sum_{i=1}^{N} Ei}$$

wobei SoH' den relativen Energieaufnahmefähigkeitsmittelwert, SoHi eine die zweigindividuelle, auf die nominale Energieaufnahmekapazität des i-ten Energiespeicherzweigs bezogene relative Energieaufnahmefähigkeit des i-ten Energiespeicherzweigs angebende Energieaufnahmefähigkeitsangabe, N die Anzahl der parallel geschalteten Energiespeicherzweige, Ei die nominelle Energieaufnahmekapazität des i-ten Energiespeicherzweigs und i eine natürliche Zahl zwischen 1 und N bezeichnet.

Gemäß einer auf voranstehenden Weiterbildungen basierenden weiteren Weiterbildung ist der relative Ladezustandsänderungswert vorzugsweise proportional zum Quotienten zwischen einer Sollenergie, die in der Speicheranordnung nach dem Laden vorhanden sein soll, und der in der Speicheranordnung speicherbaren Maximalenergie.

Gemäß einer weiteren Weiterbildung wird der relative Ladezustandsänderungswert errechnet gemäß

$$dSoC = \frac{Esoll}{SoH' \cdot \sum_{i=1}^{N} Ei}$$

wobei dSoC den Ladezustandsänderungswert, Esoll eine Sollenergie, die in der Speicheranordnung nach dem Speichern der Ladeenergie vorhanden sein soll, SoH' den relativen Energieaufnahmefähigkeitsmittelwert, N die Anzahl der parallel geschalteten Energiespeicherzweige, Ei die nominelle Energieaufnahmekapazität des i-ten Energiespeicherzweigs und i eine natürliche Zahl zwischen 1 und N bezeichnet.

Gemäß einer weiteren Weiterbildung wird die Höhe der Sollenergie derart bemessen, dass diese einem Schienenfahrzeug das Befahren eines vorausliegenden Streckenabschnitts nichtelektrifizierten Streckenabschnitts ermöglicht. Vorzugsweise wird bei der Berechnung der Höhe der Sollenergie eine Sicherheitsmarge berücksichtigt.

Den oben aufgeführten Gleichungen

$$SoCsoll = SoCm + (dSoC/2)$$

und

$$SoCe = SoCm - (dSoC/2)$$

lässt sich entnehmen, dass das Laden und Entladen vorzugsweise symmetrisch um den Ladezustandsmittelwert SoCm erfolgt, um ein Tiefentladen der Speicherzweige auf die Fälle zu beschränken, bei denen der Energiehub bzw. die Höhe der Sollenergie Esoll dies unbedingt erforderlich macht, beispielsweise, wenn das Schienenfahrzeug einen vorausliegenden nichtelektrifizierten Streckenabschnitt befahren soll.

Den Gleichungen lässt sich außerdem entnehmen, dass nach Abschluss eines jeden Ladevorgangs und nach Abschluss eines jeden Entladevorgangs die Speicherzweige jeweils denselben Ladezustand aufweisen.

Gemäß einer weiteren Weiterbildung umfassen die Energiespeicherzweige jeweils eine Traktionsbatterie und einen das Laden und Entladen der jeweiligen Traktionsbatterie steuernden Gleichspanungswandler, und erfolgt das Laden und Entladen der Energiespeicherzweige durch Ansteuerung der Gleichspanungswandler.

Vorteilhaft werden beim Laden einer Sollenergie Esoll die Energiespeicherzweige jeweils auf denselben relativen Ladezustandssollwert geladen, wobei der relative Ladezustandssollwert berechnet wird gemäß

$$SoCsoll = SoCm + (dSoC/2)$$

mit

$$dSoC = \frac{Esoll}{SoH' \cdot \sum_{i=1}^{N} Ei}$$

und

$$SoH' = \frac{\sum_{i=1}^{N} SoHi \cdot Ei}{\sum_{i=1}^{N} Ei}$$

Ebenfalls vorteilhaft werden beim Entladen der Sollenergie Esoll die Energiespeicherzweige jeweils auf denselben relativen Entladezustandssollwert entladen, wobei der relative Entladezustandssollwert berechnet wird gemäß

$$SoCe = SoCm - (dSoC/2)$$

mit

$$dSoC = \frac{Esoll}{SoH' \cdot \sum_{i=1}^{N} Ei}$$

und

$$SoH' = \frac{\sum_{i=1}^{N} SoHi \cdot Ei}{\sum_{i=1}^{N} Ei}$$

Beim Laden der Sollenergie und Entladen der Sollenergie können die Speicherzweige zwar parallel betrieben werden in dem Sinne, dass alle Speicherzweige zu jedem Zeitpunkt stets denselben Ladezustand aufweisen. Alternativ ist es jedoch auch möglich, die Speicherzweige zeitlich gestaffelt zu betreiben und sie beispielsweise nacheinander auf den Ladezustandssollwert aufzuladen und später nacheinander auf den Entladezustandssollwert zu entladen.

Wenn beim Laden der Sollenergie und beim Entladen der Sollenergie die Speicherzweige parallel betrieben werden sollen, so können sie mit gleich großen Ladeströmen und gleich großen Entladeströmen betrieben werden. Speicherzweige mit kleinerer Energieaufnahmefähigkeit werden dabei beispielsweise kürzer geladen bzw. entladen als Speicherzweige mit demgegenüber größerer Energieaufnahmefähigkeit.

Wenn beim Laden der Sollenergie und beim Entladen der Sollenergie die Speicherzweige parallel betrieben werden sollen, können sie alternativ mit individuell angepassten Ladeströmen und individuell angepassten Entladeströmen betrieben werden. Beispielsweise kann durch eine solche Anpassung der Ladeströme und Entladeströme erreicht werden, dass die Speicherzweige zu gleichen Zeitpunkten den Ladezustandssollwert bzw. den Entladezustandssollwert erreichen. Speicherzweige mit kleinerer Energieaufnahmefähigkeit werden in einem solchen Falle mit kleineren Strömen betrieben als Speicherzweige mit demgegenüber größerer Energieaufnahmefähigkeit.

Ein erfindungsgemäßes Schienenfahrzeug umfasst eine zumindest zwei elektrisch parallel geschaltete Energiespeicherzweige aufweisende Speicheranordnung und eine Ladesteuereinrichtung , wobei die Ladesteuereinrichtung derart ausgestaltet ist, dass sie beim Laden der Speicheranordnung mittels Ladeenergie die Aufteilung der Ladeenergie auf die Energiespeicherzweige in Abhängigkeit von deren zweigindividuellen Energieaufnahmefähigkeit vornimmt, wobei die zumindest zwei Energiespeicherzweige jeweils auf denselben relativen Ladezustandssollwert geladen werden, wobei der relative Ladezustandssollwert die Energie angibt, die der jeweilige Energiespeicherzweig, bezogen auf die von ihm individuell tatsächlich speicherbare Maximalenergie, nach dem Laden speichern soll, und dass die Ladesteuereinrichtung den relativen Ladezustandssollwert berechnet gemäß

$$\mathtt{SoCsoll = SoCm + (dSoC/2)}$$

wobei SoCsoll den Ladezustandssollwert, dSoC einen relativen Ladezustandsänderungswert und SoCm einen Ladezustandsmittelwert bezeichnet.

Bezüglich der Vorteile des erfindungsgemäßen Schienenfahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen.

Das Schienenfahrzeug weist gemäß einer Weiterbildung eine Fahrzeugsteuereinrichtung auf, die dazu ausgestaltet ist, eine Sollenergie zu berechnen, die es dem Schienenfahrzeug ermöglicht, einen vorausliegenden nichtelektrifizierten Streckenabschnitt zu befahren. Die Fahrzeugsteuereinrichtung übermittelt einen die Sollenergie angebenden Energiesollwert vorzugsweise an die Ladesteuereinrichtung.

Die Ladesteuereinrichtung ist vorzugsweise derart ausgestaltet, dass sie nach Erhalt des Energiesollwerts von der Fahrzeugsteuereinrichtung und vor der Einfahrt in den nichtelektrifizierten Streckenabschnitt die Energiespeicherzweige jeweils auf denselben relativen Ladezustandssollwert auflädt, wobei sie den relativen Ladezustandssollwert SoCsoll unter Heranziehung der Sollenergie Esoll berechnet mit

$$dSoC = \frac{Esoll}{SoH' \cdot \sum_{i=1}^{N} Ei}$$

und

$$SoH' = \frac{\sum_{i=1}^{N} SoHi \cdot Ei}{\sum_{i=1}^{N} Ei}$$

Die Ladesteuereinrichtung lädt die Energiespeicherzweige vorzugsweise während einer Fahrt in einem elektrifizierten Streckenabschnitt auf, der vor dem nichtelektrifizierten Streckenabschnitt liegt bzw. befahren wird. Die Energie zum Laden wird vorzugsweise aus einem Energieversorgungsnetz des elektrifizierten Streckenabschnitts entnommen. Der elektrifizierte Streckenabschnitt kann dabei auch lediglich einen Bereich um eine Haltestation umfassen, wobei ein wesentlicher Anteil der zu ladenden Energie beispielsweise während des Zeitraums eines Halts des Schienenfahrzeugs an der Haltestation aufgenommen wird.

Als vorteilhaft wird es angesehen, wenn die Ladesteuereinrichtung während der Fahrt in dem nichtelektrifizierten Streckenabschnitt und beim Entnehmen der Sollenergie Esoll die Energiespeicherzweige jeweils auf denselben relativen Entladezustandssollwert SoCe entlädt, wobei sie den relativen Entladezustandssollwert berechnet gemäß

$$\mathtt{SoCe = SoCm - (dSoC/2)}$$

Die Erfindung wird nachfolgend anhand von Ausführungsbeispielen näher erläutert, dabei zeigen beispielhaft:

Figur 1     ein Ausführungsbeispiel für ein erfindungsgemäßes Schienenfahrzeug, bei dem eine Speicheranordnung mit extern eingespeisten Energieaufnahmefähigkeitsangaben arbeitet,

Figur 2     ein Ausführungsbeispiel für ein erfindungsgemäßes Schienenfahrzeug, bei dem eine Speicheranordnung Energieaufnahmefähigkeitsangaben anhand von Spannungs- und Strommesswerten selbst errechnet,

Figur 3     ein Ausführungsbeispiel für ein erfindungsgemäßes Schienenfahrzeug, bei dem eine Speicheranordnung mehr als zwei Speicherzweige bzw. eine Vielzahl an Speicherzweigen aufweist, und

Figur 4     beispielhaft den zeitlichen Verlauf von Lade- und Entladevorgängen in einem Ladezustand-Zeit-Diagramm.

In den Figuren werden der Übersicht halber für identische oder vergleichbare Komponenten dieselben Bezugszeichen verwendet.

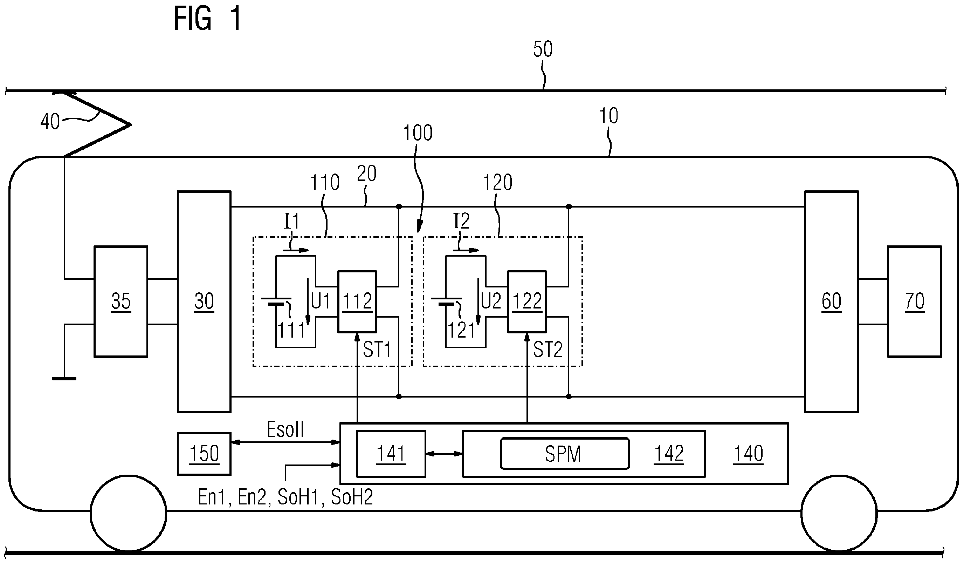

Die Figur 1 zeigt ein Ausführungsbeispiel für ein erfindungsgemäßes Schienenfahrzeug 10, das mit einem internen Gleichspannungszwischenkreis 20 ausgestattet ist. Der Gleichspannungszwischenkreis 20 steht, insbesondere bei einer netzseitigen Wechselstromversorgung, über einen netzseitigen Umrichter 30, einen netzseitigen Transformator 35 und einen Stromabnehmer 40 mit einem externen Energieversorgungsnetz 50 in Verbindung oder ist, insbesondere bei einer netzseitigen Gleichstromversorgung, zumindest über den Stromabnehmer 40 mit dem Energieversorgungsnetz 50 verbindbar.

Darüber hinaus steht der Gleichspannungszwischenkreis 20 bei dem Ausführungsbeispiel gemäß Figur 1 über einen antriebsseitigen Umrichter 60 mit einer Antriebseinheit 70 in Verbindung, die einen oder mehrere Antriebsmotoren umfassen kann.

An den Gleichspannungszwischenkreis 20 ist eine Speicheranordnung 100 angeschlossen, die einen, in der Figur 1 linken, ersten Energiespeicherzweig 110 und einen, in der Figur 1 rechten, zweiten Energiespeicherzweig 120 aufweist.

Der erste Energiespeicherzweig 110 umfasst eine Traktionsbatterie 111 und einen Gleichspannungswandler 112, der die Traktionsbatterie 111 mit dem Gleichspannungszwischenkreis 20 verbindet. Die tatsächliche Energieaufnahmefähigkeit bzw. Ist-Energieaufnahmefähigkeit des ersten Energiespeicherzweiges 110 bzw. der ersten Traktionsbatterie 111 wird durch eine Energieaufnahmefähigkeitsangabe SoHI definiert, die fachsprachlich auch als State-of-Health -Angabe bezeichnet werden kann.

Die Energieaufnahmefähigkeitsangabe SoHI definiert die auf die nominale Energieaufnahmekapazität bzw. die Nenn-Energieaufnahmekapazität En1 (angegeben beispielsweise in kWh) bezogene tatsächliche bzw. aktuelle Energieaufnahmefähigkeit (Ist-Energieaufnahmefähigkeit, angegeben beispielsweise in kWh) Emax1, vorzugsweise gemäß

$$SoH1 = Emax1/En1$$

Die Energieaufnahmefähigkeitsangabe SoHI ist also energiebezogen und nicht ladungsmengenbezogen und liegt zwischen 0 (nicht funktionsfähig) und ca. 1 (neue Batterie) bzw. 0% und ca. 100%.

Der in der Figur 1 rechte, zweite Energiespeicherzweig 120 ist von der Struktur her mit dem ersten Energiespeicherzweig 110 vergleichbar und umfasst eine zweite Traktionsbatterie 121 und einen zweiten Gleichspannungswandler 122, der die zweite Traktionsbatterie 121 mit dem Gleichspannungszwischenkreis 20 verbindet.

Die zweite Traktionsbatterie 121 bzw. der zweite Energiespeicherzweig 120 werden durch eine Energieaufnahmefähigkeitsangabe SoH2 charakterisiert, die fachsprachlich auch als State-of-Health-Angabe bezeichnet werden kann und die auf die nominale Energieaufnahmekapazität bzw. die Nenn-Energieaufnahmekapazität En2 des zweiten Energiespeicherzweigs 120 bzw. der zweiten Traktionsbatterie 121 bezogene tatsächliche bzw. aktuelle maximale Energieaufnahmefähigkeit Emax2 (Ist-Energieaufnahmefähigkeit) definiert, beispielsweise gemäß:

$$SoH2 = Emax2/E2n.$$

Nachfolgend wird beispielhaft davon ausgegangen, dass beispielsweise aufgrund von Alterung die Energieaufnahmefähigkeit der beiden Traktionsbatterien 111 und 121 unterschiedlich groß ist, also gilt:

$$SoH1 \neq SoH2.$$

Um diesem Umstand Rechnung zu tragen und bezüglich der Energieaufnahmefähigkeit weniger performante Traktionsbatterien beim Laden und Entladen weniger stark zu belasten als höher performante, ist bei dem Ausführungsbeispiel gemäß Figur 1 eine Ladesteuereinrichtung 140 vorgesehen, die mit den beiden Gleichspannungswandlern 112 und 122 in Verbindung steht und diese derart ansteuert, dass die zugeordneten Traktionsbatterien 111 und 121 jeweils mit Blick ihre jeweilige individuelle Energieaufnahmefähigkeit betrieben werden.

Die Ladesteuereinrichtung 140 ist zu diesem Zwecke beispielsweise mit einer Recheneinrichtung 141 und einem Speicher 142 ausgestattet, in dem ein Steuerprogrammmodul SPM abgespeichert ist. Bei Ausführung des Steuerprogrammmoduls SPM durch die Recheneinrichtung 141 führt diese ein Ansteuerverfahren zur Ansteuerung der beiden Gleichspannungswandler 112 und 122 durch, wie weiter unten näher erläutert werden wird.

Das Schienenfahrzeug 10 gemäß Figur 1 ist darüber hinaus mit einer Fahrzeugsteuereinrichtung 150 ausgestattet, die mit der Ladesteuereinrichtung 140 in Verbindung steht und mit dieser zusammenarbeitet.

Das Schienenfahrzeug 10 gemäß Figur 1 kann beispielsweise wie folgt betrieben werden:
Ermittelt die Fahrzeugsteuereinrichtung 150, dass ein vorausliegender Streckenabschnitt kein externes Energieversorgungsnetz 50 aufweist und daher keine externe Energieeinspeisung erfolgen wird, so berechnet sie die Fahrenergie, die zum Befahren dieses nichtelektrifizierten, vorausliegenden Streckenabschnitts benötigt wird. Da diese Fahrenergie vor dem Einfahren in den nichtelektrifizierten Streckenabschnitt in der Speicheranordnung 100 abgespeichert sein muss, um ein batteriebetriebenes Durchfahren zu ermöglichen, wird sie nachfolgend als Sollenergie Esoll bezeichnet, die in der Speicheranordnung 100 vor dem Einfahren in den nichtelektrifizierten Abschnitt mindestens abgespeichert sein soll bzw. muss. Ein die Sollenergie Esoll angebender Energiesollwert wird zur Ladesteuereinrichtung 140 übermittelt.

Um der Ladesteuereinrichtung 140 eine zweigindividuelle Ansteuerung mit Blick auf die zweigindividuelle Energieaufnahmefähigkeit der beiden Traktionsbatterien 111 und 121 zu ermöglichen, werden in die Ladesteuereinrichtung 140 die Werte für die Nenn-Energieaufnahmekapazität En1 der Traktionsbatterie 111 und die Nenn-Energieaufnahmekapazität En2 der Traktionsbatterie 112 eingespeist und dort abgespeichert.

Darüber hinaus werden der Ladesteuereinrichtung 140 die Energieaufnahmefähigkeitsangaben SoHl und SoH2 mitgeteilt, die die jeweils aktuelle Energieaufnahmefähigkeit der Traktionsbatterien 111 und 121 definieren.

Das Steuerprogrammmodul SPM ist derart ausgebildet, dass beim Laden der Speicheranordnung 100 die Aufteilung der Ladeenergie auf die Energiespeicherzweige in Abhängigkeit von den relativen Energieaufnahmefähigkeitsangaben SoHl und SoH2 erfolgt und die Traktionsbatterien 111 und 121 jeweils auf denselben relativen Ladezustandssollwert SoCsoll (SoC bezeichnet fachsprachlich den Ladezustand bzw. "State of Charge") geladen werden.

Dies soll beispielhaft näher für den Beispielfall erläutert werden, dass in der Speicheranordnung 100 so viel Energie gespeichert werden soll, dass in der Speicheranordnung 100 vor dem Einfahren in den erwähnten nichtelektrifizierten Abschnitt zumindest die Sollenergie Esoll zur Verfügung steht.

Der relative Ladezustandssollwert SoCsoll gibt die Energie an, die jede der Traktionsbatterien 111 und 121, bezogen auf die von ihnen jeweils individuell tatsächlich speicherbare Maximalenergie Emax1 bzw. Emax2, nach dem Laden speichern soll. Der relative Ladezustandssollwert wird vorzugsweise berechnet wird gemäß

$$SoCsoll = SoCm + (dSoC/2)$$

wobei SoCsoll den Ladezustandssollwert, dSoC einen relativen Ladezustandsänderungswert und SoCm einen Ladezustandsmittelwert bezeichnet.

Der Ladezustandsmittelwert SoCm beträgt vorzugsweise 50%.

Zur Ermittlung des relativen Ladezustandsänderungswerts dSoC wird zunächst ein relativer Energieaufnahmefähigkeitsmittelwert SoH' ermittelt, der die mittlere, auf die Summe der nominalen Energieaufnahmekapazitäten En1 und En2 der Traktionsbatterien 111 und 121 bezogene relative Energieaufnahmefähigkeit der Speicheranordnung 100 beschreibt.

Der relative Energieaufnahmefähigkeitsmittelwert SoH' wird vorzugsweise berechnet gemäß

$$SoH' = \frac{\sum_{i=1}^{N} SoHi \cdot Ei}{\sum_{i=1}^{N} Ei}$$

für N Traktionsbatterien bzw. Speicherzweige und gemäß

$$SoH' = (SoH1 \cdot En1 + SoH2 \cdot En2)/(En1+En2)$$

für die zwei Traktionsbatterien 111 und 121 in Figur 1.

Mit dem Energieaufnahmefähigkeitsmittelwert SoH' lässt sich der relative Ladezustandsänderungswert errechnen gemäß

$$dSoC = \frac{Esoll}{SoH' \cdot \sum_{i=1}^{N} Ei}$$

für N Traktionsbatterien bzw. Speicherzweige und gemäß

$$dSoC = Esoll/(SoH' \cdot (En1+En2))$$

für die zwei Traktionsbatterien 111 und 121 in Figur 1.

Es lässt sich anhand der letzten Gleichung erkennen, dass der relative Ladezustandsänderungswert proportional zum Quotienten zwischen der Sollenergie Esoll, die in der Speicheranordnung 100 nach dem Abspeichern der Ladeenergie mindestens vorhanden sein soll, und der in der Speicheranordnung 100 speicherbaren Maximalenergie ist.

Das Entladen der Speicheranordnung 100, beispielsweise bei Fahrt in dem erwähnten nichtelektrifizierten Streckenabschnitt, erfolgt vorzugsweise analog bzw. derart, dass die beiden Traktionsbatterien 111 und 121 jeweils auf denselben relativen Entladezustandssollwert SoCe entladen werden.

Der relative Entladezustandssollwert SoCe gibt den Anteil der Energie an, den der jeweilige Energiespeicherzweig bzw. die jeweilige Traktionsbatterie 111 bzw. 121, bezogen auf ihre individuell tatsächlich speicherbare Maximalenergie Emax1 bzw. Emax2, nach dem Entladen noch speichern soll.

Der relative Entladezustandssollwert SoCe wird vorzugsweise berechnet gemäß

$$SoCe = SoCm - dSoC/2$$

Den obigen Erläuterungen lässt sich entnehmen, dass das Laden und Entladen zentriert um den Ladezustandsmittelwert SoCm erfolgt, der vorzugsweise 50% beträgt.

Soll beispielsweise eine Sollenergie Esoll vor dem Einfahren in den nichtelektrifizierten Streckenabschnitt vorhanden sein, die einem Energieladezustand der Speicheranordnung 100 von 70% entspricht, so werden die Traktionsbatterien jeweils auf einen Ladezustand von 85% geladen gemäß

$$SoCsoll = 50\% + (70\%/2) = 50\% + 35\% = 85\%$$

und

während der Fahrt in dem nichtelektrifizierten Streckenabschnitt auf einen Wert von 15% entladen gemäß

$$SoCe = 50\% - (70\%/2) = 15\%$$

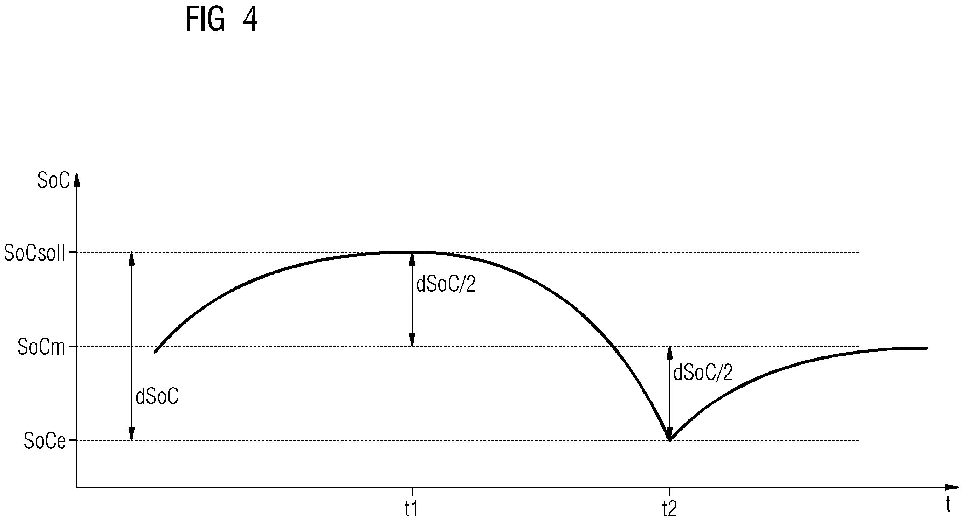

Eine vollständige Entladung wird also verhindert und der Betrieb beider Traktionsbatterien erfolgt jeweils zentriert um den Betriebspunkt (bzw. den Ladezustandsmittelwert) von z. B. 50% (siehe Figur 4) herum.

Der Ladezustandsmittelwert SoCm muss nicht zwingend 50% betragen, sondern kann auch anders gewählt werden, um eine maximale Lebensdauer der Traktionsbatterien je nach Bauart zu erreichen. Ein Bereich für den Ladezustandsmittelwert SoCm zwischen 40% und 60% ist in der Regel für die meisten Bauarten optimal.

Wird ein anderer Wert für den Ladezustandsmittelwert SoCm als 50% gewählt, so muss dies selbstverständlich bei der Berechnung des Ladezustandssollwerts SoCsoll berücksichtigt werden, um sicherzustellen, dass stets jeweils die nötige Sollenergie zur Verfügung steht, beispielsweise vor Einfahrt in einen nichtelektrifizierten Streckenabschnitt.

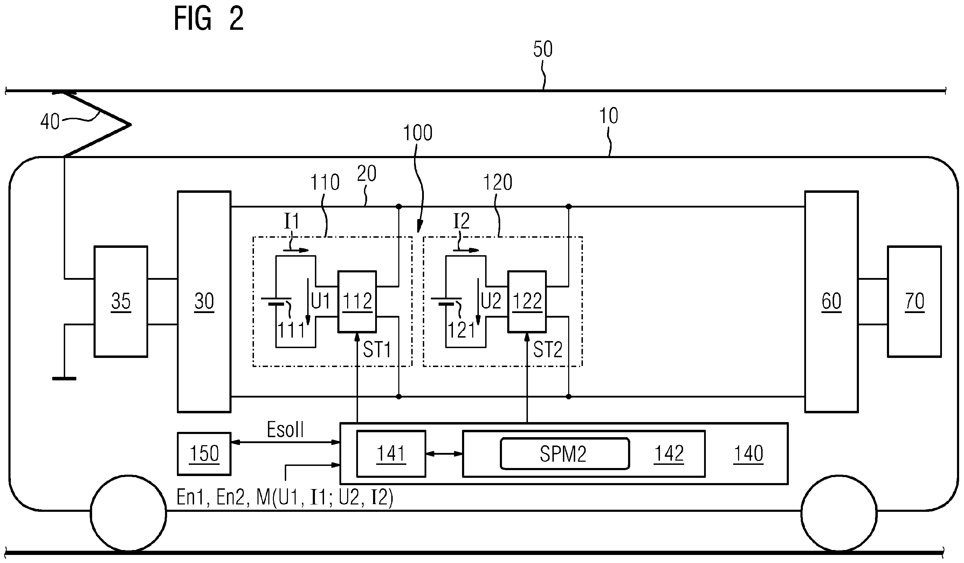

Die Figur 2 zeigt eine Ausführungsvariante des Ausführungsbeispiels gemäß Figur 1. Bei dem Schienenfahrzeug 10 gemäß Figur 2 ist in dem Speicher 142 der Ladesteuereinrichtung 140 ein Steuerprogrammmodul SPM2 abgespeichert, das zusätzlich zu der im Zusammenhang mit der Figur 1 beschriebenen Funktionalität eine weitere Funktionalität aufweist, nämlich die Energieaufnahmefähigkeitsangaben SoH1 und SoH2 selbst zu ermitteln.

Um dies zu ermöglichen, werden Spannungs- und Strommesswerte M in die Ladesteuereinrichtung 140 eingespeist, die die an den beiden Traktionsbatterien 111 und 121 anliegenden Spannungen U1 bzw. U2 und die aus bzw. in die Traktionsbatterien hinein- bzw. herausfließenden Ströme I1 und I2 angeben.

Bei einem Laden oder Entladen ermittelt die Ladesteuereinrichtung 140 jeweils die Ladungsmengenänderungen. In Leerlaufzeiten erfasst die Ladesteuereinrichtung 140 außerdem die Leerlaufspannungen U1 und U2 an den Traktionsbatterien 111 und 121. Anhand von Leerlaufspannungswerten und abgespeicherten Ladungsspannungskennlinien kann der jeweilige Ladezustand der Traktionsbatterien 111 und 121 ermittelt werden und unter Einbezug auf die ebenfalls festgestellten Ladungsmengenänderungen auf die tatsächliche bzw. aktuelle Energieaufnahmefähigkeit (Ist-Energieaufnahmefähigkeit) Emax1 bzw. Emax2 geschlossen werden.

Im Übrigen arbeitet die Ladesteuereinrichtung 140 gemäß Figur 2 vorzugsweise wie die Ladesteuereinrichtung 140 gemäß Figur 1, sodass bzgl. der Steuerung der Lade- und Entladevorgänge auf die obigen Ausführungen im Zusammenhang mit der Figur 1 verwiesen sei.

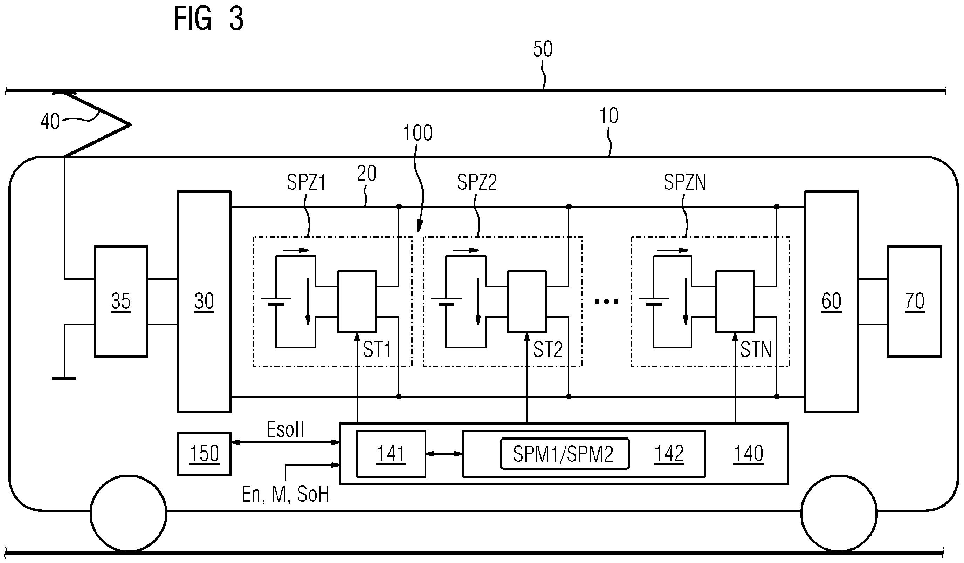

Die Figur 3 zeigt beispielhaft ein Ausführungsbeispiel für ein Schienenfahrzeug 10, bei dem die Speicheranordnung 100 mit der Ladesteuereinrichtung 140 gemäß Figur 1 oder 2 sowie einer Vielzahl N von Speicherzweigen SPZ1, SPZ2, ..., SPZN ausgestattet ist, die jeweils mit einer Traktionsbatterie und einem Gleichspannungswandler ausgestattet sind.

Das Laden und Entladen der Traktionsbatterien erfolgt mittels Steuersignalen ST1 bis STN vorzugsweise so, wie dies beispielhaft anhand der Ausführungsbeispiele gemäß den Figuren 1 und 2 erläutert wurde, also vorzugsweise anhand von Nenn-Energieaufnahmekapazitäten En, Messwerten M (Strom- und Spannungsmesswerten der Speicherzweige SPZ1, SPZ2, ..., SPZN) und/oder Energieaufnahmefähigkeitsangaben SoH, die die Traktionsbatterien bzw. die Speicherzweige SPZ1, SPZ2, ..., SPZN und deren Betriebszustand charakterisieren.

Bei den Ausführungsbeispielen gemäß den Figuren 1 bis 3 können die Traktionsbatterien jeweils eine Vielzahl an parallel und/oder in Reihe geschalteten Batteriezellen oder Batteriemodulen umfassen. Dies ist aus Gründen der Übersicht nicht weiter dargestellt.

## Patentansprüche

1. Verfahren zum Betreiben einer zumindest zwei elektrisch parallel geschaltete Energiespeicherzweige (110, 120, SPZ1-SPZN) aufweisenden Speicheranordnung (100) eines Schienenfahrzeugs (10),
   **dadurch gekennzeichnet, dass**

   beim Laden der Speicheranordnung (100) mit Ladeenergie eine Aufteilung der Ladeenergie auf die Energiespeicherzweige (110, 120, SPZ1-SPZN) in Abhängigkeit von deren zweigindividuellen Energieaufnahmefähigkeit erfolgt,
   die zumindest zwei Energiespeicherzweige (110, 120, SPZ1-SPZN) jeweils auf denselben relativen Ladezustandssollwert geladen werden, wobei der relative Ladezustandssollwert die Energie angibt, die der jeweilige Energiespeicherzweig (110, 120, SPZ1-SPZN), bezogen auf die von ihm individuell tatsächlich speicherbare Maximalenergie, nach dem Laden speichern soll, und wobei der relative Ladezustandssollwert berechnet wird gemäß

   $$SoCsoll = SoCm + (dSoC/2)$$

   wobei SoCsoll den Ladezustandssollwert, dSoC einen relativen Ladezustandsänderungswert und SoCm einen Ladezustandsmittelwert bezeichnet.

2. Verfahren nach Anspruch 1,
   **dadurch gekennzeichnet, dass**
   die Aufteilung der Ladeenergie auf die Energiespeicherzweige (110, 120, SPZ1-SPZN) in Abhängigkeit von zweigindividuellen, relativen Energieaufnahmefähigkeitsangaben (SoHl, SoH2, SoH) erfolgt, die jeweils die auf eine nominale Energieaufnahmekapazität (En1, En2, En) des jeweiligen Energiespeicherzweiges bezogene tatsächliche Energieaufnahmefähigkeit angeben.

3. Verfahren nach Anspruch 1 oder 2,
   **dadurch gekennzeichnet, dass**

   - nach dem Laden der Energiespeicherzweige (110, 120, SPZ1-SPZN) die Speicheranordnung (100) entladen wird,
   - wobei die zumindest zwei Energiespeicherzweige (110, 120, SPZ1-SPZN) jeweils auf denselben relativen Entladezustandssollwert entladen werden, und
   - wobei der relative Entladezustandssollwert den Anteil der Energie angibt, den der jeweilige Energiespeicherzweig (110, 120, SPZ1-SPZN), bezogen auf die von ihm individuell tatsächlich speicherbare Maximalenergie, nach dem Entladen noch speichern soll.

4. Verfahren nach Anspruch 3,
**dadurch gekennzeichnet, dass**

der relative Entladezustandssollwert berechnet wird gemäß

$$SoCe = SoCm - (dSoC/2)$$

wobei SoCe den Entladezustandssollwert, dSoC einen relativen Ladezustandsänderungswert und SoCm einen Ladezustandsmittelwert bezeichnet.

5. Verfahren nach einem der voranstehenden Ansprüche,
**dadurch gekennzeichnet, dass**

- ein relativer Energieaufnahmefähigkeitsmittelwert ermittelt wird, der eine mittlere, auf die Summe der nominalen Energieaufnahmekapazitäten (En1, En2, En) aller Energiespeicherzweige (110, 120, SPZ1-SPZN) der Speicheranordnung (100) bezogene relative Energieaufnahmefähigkeit der Speicheranordnung (100) beschreibt, und
- in Abhängigkeit von dem relativen Energieaufnahmefähigkeitsmittelwert der relative Ladezustandsänderungswert ermittelt wird.

6. Verfahren nach Anspruch 5,
**dadurch gekennzeichnet, dass**

der relative Energieaufnahmefähigkeitsmittelwert berechnet wird gemäß

$$SoH' = \frac{\sum_{i=1}^{N} SoHi \cdot Ei}{\sum_{i=1}^{N} Ei}$$

wobei SoH' den relativen Energieaufnahmefähigkeitsmittelwert, SoHi eine die zweigindividuelle, auf die nominale Energieaufnahmekapazität (En1, En2, En) des i-ten Energiespeicherzweigs bezogene relative Energieaufnahmefähigkeit des i-ten Energiespeicherzweigs angebende Energieaufnahmefähigkeitsangabe (SoHl, SoH2, SoH), N die Anzahl der parallel geschalteten Energiespeicherzweige (110, 120, SPZ1-SPZN), Ei die nominelle Energieaufnahmekapazität (En1, En2, En) des i-ten Energiespeicherzweigs und i eine natürliche Zahl zwischen 1 und N bezeichnet.

7. Verfahren nach einem der voranstehenden Ansprüche,
**dadurch gekennzeichnet, dass**
der relative Ladezustandsänderungswert proportional zum Quotienten aus einer Sollenergie (Esoll), die in der Speicheranordnung (100) nach dem Laden mindestens vorhanden sein soll, und der in der Speicheranordnung (100) speicherbaren Maximalenergie ist.

8. Verfahren nach einem der voranstehenden Ansprüche,
**dadurch gekennzeichnet, dass**

der relative Ladezustandsänderungswert errechnet wird gemäß

$$dSoC = \frac{Esoll}{SoH' \cdot \sum_{i=1}^{N} Ei}$$

wobei dSoC den Ladezustandsänderungswert, Esoll eine Sollenergie, die in der Speicheranordnung (100) nach dem Laden mindestens vorhanden sein soll, SoH' den relativen Energieaufnahmefähigkeitsmittelwert, N die Anzahl der parallel geschalteten Energiespeicherzweige (110, 120, SPZ1-SPZN), Ei die nominelle Energieaufnahmekapazität (En1, En2, En) des i-ten Energiespeicherzweigs und i eine natürliche Zahl zwischen 1 und N bezeichnet.

9. Verfahren nach Anspruch 7 oder 8,
   **dadurch gekennzeichnet, dass**

   - die Höhe der Sollenergie (Esoll) derart bemessen wird, dass diese dem Schienenfahrzeug (10) das Befahren eines vorausliegenden nichtelektrifizierten Streckenabschnitts ermöglicht,
   - die Energiespeicherzweige (110, 120, SPZ1-SPZN) vor dem Einfahren in den nichtelektrifizierten Streckenabschnitt jeweils auf denselben relativen Ladezustandssollwert geladen werden, und zwar während der Fahrt in einem elektrifizierten Streckenabschnitt, der vor dem nichtelektrifizierten Streckenabschnitt liegt, und
   - die Energie zum Laden aus einem Energieversorgungsnetz des elektrifizierten Streckenabschnitts entnommen wird.

10. Verfahren nach einem der voranstehenden Ansprüche,
    **dadurch gekennzeichnet, dass**

    - die zumindest zwei Energiespeicherzweige (110, 120, SPZ1-SPZN) jeweils eine Traktionsbatterie (111, 121) und einen das Laden und Entladen der jeweiligen Traktionsbatterie (111, 121) steuernden Gleichspanungswandler (112, 122) umfassen, und
    - das Laden und Entladen der Energiespeicherzweige (110, 120, SPZ1-SPZN) durch Ansteuerung der Gleichspanungswandler (112, 122) erfolgt.

11. Schienenfahrzeug (10),
    **dadurch gekennzeichnet, dass**

    - es eine zumindest zwei elektrisch parallel geschaltete Energiespeicherzweige (110, 120, SPZ1-SPZN) aufweisende Speicheranordnung (100) und eine Ladesteuereinrichtung (140) umfasst, und
    - die Ladesteuereinrichtung (140) derart ausgestaltet ist, dass sie beim Laden der Speicheranordnung (100) mittels Ladeenergie die Aufteilung der Ladeenergie auf die Energiespeicherzweige (110, 120, SPZ1-SPZN) in Abhängigkeit von deren zweigindividuellen Energieaufnahmefähigkeit vornimmt, wobei die zumindest zwei Energiespeicherzweige (110, 120, SPZ1-SPZN) jeweils auf denselben relativen Ladezustandssollwert geladen werden, wobei der relative Ladezustandssollwert die Energie angibt, die der jeweilige Energiespeicherzweig (110, 120, SPZ1-SPZN), bezogen auf die von ihm individuell tatsächlich speicherbare Maximalenergie, nach dem Laden speichern soll, und dass die Ladesteuereinrichtung (140) den relativen Ladezustandssollwert berechnet gemäß

$$SoCsoll = SoCm + (dSoC/2)$$

    wobei SoCsoll den Ladezustandssollwert, dSoC einen relativen Ladezustandsänderungswert und SoCm einen Ladezustandsmittelwert bezeichnet.

12. Schienenfahrzeug (10) nach Anspruch 11,
    **dadurch gekennzeichnet, dass**

    - es eine Fahrzeugsteuereinrichtung (150) aufweist, die dazu ausgestaltet ist, eine Sollenergie (Esoll) zu berechnen, die es dem Schienenfahrzeug (10) ermöglicht, einen vorausliegenden nichtelektrifizierten Streckenabschnitt zu befahren, und einen die Sollenergie angebenden Energiesollwert an die Ladesteuereinrichtung (140) zu übermitteln, und
    - die Ladesteuereinrichtung (140) derart ausgestaltet ist, dass sie vor dem Einfahren in den nichtelektrifizierten Streckenabschnitt die Energiespeicherzweige (110, 120, SPZ1-SPZN) jeweils auf denselben relativen Ladezustandssollwert auflädt, wobei sie den relativen Ladezustandssollwert SoCsoll unter Heranziehung der Sollenergie (Esoll) berechnet mit

$$dSoC = \frac{Esoll}{SoH' \cdot \sum_{i=1}^{N} Ei}$$

und

$$SoH' = \frac{\sum_{i=1}^{N} SoHi \cdot Ei}{\sum_{i=1}^{N} Ei}$$

FIG 1

EP 4 234 307 A1

FIG 2

EP 4 234 307 A1

FIG 3

EP 4 234 307 A1

FIG 4

EP 4 234 307 A1

Europäisches
Patentamt

European
Patent Office

Office européen
des brevets

# EUROPÄISCHER RECHERCHENBERICHT

Nummer der Anmeldung

EP 23 15 7932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 204300 B3 (BAYERISCHE MOTOREN WERKE AG [DE]) 16. Juni 2016 (2016-06-16) | 1-8, 10-12 | INV. B60L50/53 |
| Y | * Absätze [0010], [0013], [0017], [0028], [0050], [0053], [0056] * * Abbildungen 1, 3 * | 9 | B60L58/12 B60L58/18 B60L58/22 |
| | ----- | | |
| Y | DE 10 2019 210645 A1 (SIEMENS MOBILITY GMBH [DE]) 21. Januar 2021 (2021-01-21) * Absätze [0012], [0013], [0046] * * Abbildung 6 * | 9 | |
| | ----- | | |
| X | DE 10 2019 212000 A1 (AUDI AG [DE]) 11. Februar 2021 (2021-02-11) * Absätze [0035], [0038] * * Abbildung 2 * | 1,11 | |
| | ----- | | |

**RECHERCHIERTE SACHGEBIETE (IPC)**

B60L

Der vorliegende Recherchenbericht wurde für alle Patentansprüche erstellt

| Recherchenort | Abschlußdatum der Recherche | Prüfer |
|---|---|---|
| Den Haag | 14. Juli 2023 | Wirth, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 7932

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2023

| Im Recherchenbericht angeführtes Patentdokument | Datum der Veröffentlichung | Mitglied(er) der Patentfamilie | Datum der Veröffentlichung |
|---|---|---|---|
| DE 102015204300 B3 | 16-06-2016 | KEINE | |
| DE 102019210645 A1 | 21-01-2021 | DE 102019210645 A1 | 21-01-2021 |
| | | EP 3766724 A1 | 20-01-2021 |
| DE 102019212000 A1 | 11-02-2021 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018090948 A1